# EUROPEAN PATENT SPECIFICATION

(11) **EP 4 108 340 B1**
(45) Date of publication and mention of the grant of the patent: **11.06.2025**
(21) Application number: 21181025.4
(22) Date of filing: 23.06.2021
(51) Int. Cl.: B04B 1/14, B04B 11/04

(54) **A METHOD OF OPERATING A CENTRIFUGAL SEPARATOR**
VERFAHREN ZUM BETRIEB EINES ZENTRIFUGALABSCHEIDERS
PROCÉDÉ DE FONCTIONNEMENT D'UN SÉPARATEUR CENTRIFUGE

(43) Date of publication of application: 28.12.2022
(73) Proprietor: Alfa Laval Corporate AB, 221 00 Lund (SE)
(72) Inventor: NOZADZE, Shota, 118 62 Stockholm (SE); SUNDIN, Magnus, 118 26 Stockholm (SE)
(74) Representative: Alfa Laval Attorneys

(56) References cited:
- WO-A1-2019/058829
- DE-A1- 102015 119 165
- DE-A1- 2 814 523

## Description

### Field of the Invention

The present invention relates to the field of centrifugal separators, and more particularly to a method of operating centrifugal separator.

### Background of the Invention

Centrifugal separators are generally used for separation of liquids and/or for separation of sludge from a liquid. During operation, liquid mixture to be separated is introduced into a rotating bowl and heavy particles or denser liquid, usually water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively.

In intermittently discharging separators, separated sludge is discharged through a number of ports in the periphery of the separator bowl. Between discharges these ports are covered by an operational slide which forms an internal bottom in the separating space of the centrifuge bowl. However, it is important to trigger a discharge at the right moment. If too early, too much liquid phase may be lost via the solids discharge ports, and if discharge is too late, separated solids may escape through the liquid outlet or solids may be built up within the centrifuge bowl such that it reaches the separation discs, thereby negatively affecting the separation capacity. In the clarification of a beverage product, such as separation of yeast from beer, a turbidity meter at the outlet may be used for indicating the time for discharge. An example of such a method is found in US-1 0,040,076 A1 or control methods for a centrifuge such as in WO-A2019/058,829 and DE-2,814,523.

However, such a solution may not be satisfactory in terms of late indication of discharge time and wasting of product together with the solids during discharge. Thus, there is a need in the art for improved methods for operating a centrifugal separator that allows for automatic or self-triggering of the solids discharge.

### Summary of the Invention

It is an object of the invention to at least partly overcome one or more limitations of the prior art. In particular, it is an object to provide a method of operating a centrifugal separator that allows for self-triggering of the intermittent discharge of a sludge phase.

As a first aspect of the invention, there is provided a method of operating a centrifugal separator for separating at least one liquid phase and a sludge phase from a liquid feed mixture, wherein said centrifugal separator comprises
a frame, a drive member and a centrifuge bowl, wherein the drive member is configured to rotate the centrifuge bowl in relation to the frame around an axis of rotation (X), and
wherein centrifuge bowl encloses a separation space and a sludge space;
wherein the separation space comprises a stack of separation discs arranged coaxially around the axis of rotation and wherein said sludge space is arranged radially outside said stack of separation discs;
wherein the centrifuge bowl further comprises an inlet for receiving the liquid feed mixture, at least one liquid outlet for a separated liquid phase, and sludge outlets for a separated sludge phase arranged at the periphery of the centrifuge bowl;
   wherein the method comprises the steps of
   a) supplying a liquid feed mixture to be separated to the inlet of the centrifuge bowl,
   b) determining a particle flow rate of the liquid feed mixture being supplied in step a),
   c) determining a volume filled with particles within the centrifuge bowl based on the measurements of step b), and
   d) discharging a sludge phase comprising said particles via said sludge outlets based on the determination of step b), wherein the discharge is of a specific volume or at a specific time point.

The centrifugal separator may be a disc-stack centrifugal separator, e.g. as disclosed in US20210107014. The rotatable centrifuge bowl is arranged within the stationary frame. Further, the centrifugal separator is arranged for discharging a sludge phase, i.e. a separated sludge phase that may also contain some liquid, to a surrounding space around the centrifuge bowl, as known in the art. This is performed by an intermittent discharge system comprising sludge outlets at the periphery of the centrifuge bowl. The sludge outlets may be in the form of a set of ports arranged to be opened intermittently during operation. The centrifugal separator may be arranged for emptying a partial content of the bowl during such an intermittent discharge (partial discharge) or arranged for emptying the whole content of the centrifuge bowl during intermittent discharge (full discharge).

The first aspect of the invention is based on the insight that a determination of the particle flow rate of the liquid feed mixture entering the centrifuge bowl and from such measurements a volume filled with particles within the bowl, allows for more fine-tuned discharge options for an operator. For example, based on the calculations of the volume filled with particles within the bowl, the discharge size may be set to correspond to such a calculated volume. Further, the risk of having too much solids or sludge within the bowl is decreased. Thus, a sludge discharge may be performed before the volume filled with particles within the bowl is larger than the volume of the sludge space.

The sludge space is the volume in the bowl that is arranged radially outside of the stack of separation discs, in which separated sludge and heavy phase is collected during operation. The sludge space thus extends radially from the outer portion of the stack of separation discs to the inner periphery of the centrifuge bowl.

The method thus provides determination of the volume filled with particles within the centrifuge bowl at every moment during operation. Thus, the method allows for discharging a more or less constant sludge volume even when the particle concentration in the incoming liquid feed mixture varies a lot. This is especially advantageous in the beverage industry, in which the yeast concentration in the process liquid to be clarified may vary a lot. As mentioned above, the method further allows for discharging different sludge volumes at different discharges, with a decreased risk of loosing valuable liquid product with the sludge discharge.

Step a) of supplying a liquid feed mixture to the centrifuge bowl may be performed by supplying the feed mixture via a stationary inlet pipe extending into the centrifuge bowl from the top, or via a rotating, hollow spindle onto which the centrifuge bowl is attached, such as via a hollow spindle attached to the bottom of the centrifuge bowl. Step a) may be performed while the centrifuge bowl is rotating.

Step a) may of course also comprise separating the liquid feed mixture into at least one separated liquid phase and a separated sludge phase within the centrifuge bowl.

Step b) of determining a particle flow rate of the liquid feed mixture that is supplied to the inlet may take place during supply of the liquid fed mixture to the centrifuge bowl. The particle flow rate may be determined continuously or at discrete time points, such as with a specific frequency. This may depend on the amount of solids in the feed.

Step c) of determining a volume filled with particles within the bowl from the measurements of step b) may also be performed continuously or at discrete time points, such as with a specific frequency. Steps b) and c) may be performed during step a).

Step d) of discharging a sludge phase (comprising particles) is based on the determination of the volume filled with particles in step b). Thus, the initiation of the discharge depends on the determined volume in step c), so that e.g. a discharge having a specific sludge volume may be set or discharge at a specific timepoint may be initiated.

Step c) of discharging a separated sludge phase may be repeated several times during a separation process, depending on the amount of sludge in the liquid feed mixture. During separation, at least one, such as one or two, liquid phases are separated from the liquid feed mixture. Consequently, the method may further comprise discharging at least one separated liquid phase from the centrifuge bowl. Discharge of at least one liquid phase may be performed continuously.

In embodiments of the first aspect, the discharge of step d) is of a volume that is less than the volume of the sludge space. Consequently, the operator may want to discharge at a volume X1 that is lower than the sludge space, and when the determined volume filled with particles in step c) has reached X1, then discharge may be initiated.

The centrifugal separator may comprise an intermittent discharge system for discharging the separated sludge phase from the centrifuge bowl and a supply system for supplying hydraulic fluid to the intermittent discharge system. The amount of supplied hydraulic fluid supplied to the centrifuge bowl, and thereby the volume of the discharge, may be determined by the magnitude of a trigger signal, which may be in the form of a pulse of discharge air pressure supplied to the intermittent discharge system. The magnitude of the trigger signal may thus correspond to the absolute pressure of the discharge air pressure. Consequently, the volume of the sludge discharge may be regulated by adjusting the discharge air pressure.

In embodiments of the first aspect, the discharge of step d) is at a time point that is before the determined volume filled with particles in step c) is larger than the volume of the sludge space.

Thus, step c) may occur before the determined volume filled with particles within the bowl has reached a certain maximum value, such as the volume of the sludge space. When this value is exceeded, the volume of the particles within the centrifuge bowl may be such that the sludge phase extends into the stack of separation discs or escapes with a separated liquid phase, thus decreasing the separation performance.

Step c) may be performed e.g. when the calculated volume filled with particles has reached a certain volume that is lower than the volume of the sludge space. The volume of the sludge space may be determined by the dimensions of the centrifuge bowl and may thus be a pre-set value that does not have to be determined or calculated during operation of the centrifugal separator.

Further, step c) may be performed at a predicted timepoint, wherein the predicted timepoint is based on the determined rate at which the volume filled with particles within the bowl is increasing.

In embodiments of the first aspect, the particle flow rate is determined by measuring the turbidity and the flow rate of the liquid feed mixture being supplied in step a). Thus, step a) may comprise measuring the turbidity of the liquid feed mixture, such as using in-line turbidity measurements using a turbidity meter.

However, other means may also be used for measuring the particle flow rate, such as a vision camera

As an example, the particle flow rate may then be determined by using a calibration function of the turbidity as a function of particle concentration in the liquid feed mixture.

The calibration function may thus relate a turbidity value, such as a light absorption or light scattering value, to a specific particle concentration in the liquid feed mixture. Thus, as an example, the turbidity may be measured as light absorption of the liquid feed mixture.

The calibration function, or look-up table, may be predefined. However, in embodiments of the first aspect, the method comprises a step of performing calibration measurements using a number of samples of known particle concentration. In such calibration measurements, the turbidity may be measured for each sample and a function may be fitted to the data for relating a measured turbidity value to a particle concentration in the liquid feed mixture at certain flows and concentrations. The inventor have also found that the absorbed light in a turbidity meter may have a linear relationship with the particle concentration in the liquid feed mixture for a range of particle concentrations, especially for the concentration of yeast particles in the liquid feed mixture. Thus, this makes it an advantage to use turbidity for measuring the particle flow rate in step b) since a measured turbidity easily may be converted to a particle concentration.

In embodiments of the first aspect, step c) is performed by integrating the determined particle flow rate over time. Thus, the volume filled with particles may easily be calculated from the particle flow rate. The method thus involves calculating how much particles that are supplied via the feed to the bowl.

In embodiments of the first aspect, the volume filled with particles within the centrifuge bowl is determined continuously during operation of the centrifugal separator.

The volume filled with particles may thus be continuously calculated or with a specific frequency. The determined volume filled with particles within the bowl may thus continuously be compared to a value of the sludge space within the bowl, or with a value that is below the volume of the sludge space of the bowl. Determining the volume filled with particles continuously also allows for discharging a desired volume.

In embodiments of the first aspect, the method further comprises measuring the turbidity of a separated liquid phase and discharging a sludge phase via said sludge outlets if the measured turbidity of the separated liquid phase is above a threshold value.

Thus, the turbidity may also be measured at one of the liquid outlets. This may thus function as a back-up to further decrease the risk of particles escaping through the liquid outlets. The measured turbidity, such as a measured absorption, may be used for determining the particle concentration of the separated liquid phase, and discharge may thus be triggered in case the particle concentration is above a certain threshold.

The method is advantageously used for liquid feed mixtures having a particle concentration that may vary over time, such as in the clarification of a beverage such as beer. Consequently, in embodiments of the first aspect, the liquid feed mixture comprises yeast particles and wherein the yeast flow rate is determined in step b), the yeast volume within the centrifuge bowl is determined in step c), and wherein a sludge phase comprising yeast is discharged in step d).

However, it is to be understood that the method may also work with other particles than yeast. For example, the liquid feed mixture may be a juice comprising juice pulp.

In embodiments of the first aspect, the method is further comprising a step of verifying that the discharged volume of step d) corresponds to the determined volume filled with particles of step c).

This may thus be a control step in which the calculated volume filled with particles correspond to what has actually been present within the bowl. This may be performed during the separation process, and may thus function to secure that the means for measuring the particle flow rate, such as a turbidity meter, acts properly

As a second aspect of the invention, there is provided a centrifugal separator for separating at least one liquid phase and a sludge phase from a liquid feed mixture, comprising
a frame, a drive member and a centrifuge bowl, wherein the drive member is configured to rotate the centrifuge bowl in relation to the frame around an axis of rotation (X), and
wherein centrifuge bowl encloses a separation space and a sludge space;
wherein the separation space comprises a stack of separation discs arranged coaxially around the axis of rotation (X) and wherein said sludge space is arranged radially outside said stack of separation discs;
wherein the centrifuge bowl further comprises an inlet for receiving the liquid feed mixture, at least one liquid outlet for a separated liquid phase, and sludge outlets for a separated sludge phase arranged at the periphery of the centrifuge bowl;
wherein the centrifugal separator further comprises
a turbidity sensor arranged upstream of said inlet for measuring the turbidity of the liquid feed mixture to be separated; and
a control unit configured for
   determining a particle flow rate of the liquid feed mixture being supplied to the inlet based on a measured turbidity by said turbidity sensor;
   determining a volume filled with particles within the centrifuge bowl based on the measured particle flow rate;
   initiating a discharge of a sludge phase comprising said particles via said sludge outlets based on the determined volume filled with particles within the centrifuge bowl, wherein the discharge is of a specific volume or at a specific time point..

This aspect may generally present the same or corresponding advantages as the former aspect. Effects and features of this second aspect are largely analogous to those described above in connection with the first aspect. Embodiments mentioned in relation to the first aspect are largely compatible with the second aspect.

The centrifugal separator may be operated according to the method of the first aspect. The centrifugal separator is for separation of a liquid feed mixture. The liquid feed mixture may be an aqueous liquid or an oily liquid. As an example, the centrifugal separator may be for separating solids and one or two liquids from the liquid feed mixture.

The frame of the centrifugal separator is stationary and thus a non-rotating part. The centrifuge bowl of the separator may be arranged to be rotated around vertical axis of rotation, i.e. the axis of rotation (X) may extend vertically. The centrifuge bowl is usually supported by a spindle, i.e. a rotating shaft, and may thus be mounted to rotate with the spindle. Consequently, the centrifugal separator may comprise a spindle that is rotatable around the axis of rotation (X). The centrifugal separator may be arranged such that the centrifuge bowl is supported by the spindle at one of its ends, such at the bottom end or the top end of the spindle.

The drive member may comprise an electrical motor having a rotor and a stator. The rotor may be fixedly connected to a rotating part, such as to a spindle. Advantageously, the rotor of the electrical motor may be provided on or fixed to the spindle of the rotating part. Alternatively, the drive member may be provided beside the spindle and rotate the rotating part by a suitable transmission, such as a belt or a gear transmission.

The centrifuge bowl encloses by rotor walls a separation space and a sludge space. The separation space, in which the separation of the fluid mixture takes place comprises a stack of separation discs. The separation discs may e.g. be of metal. Further, the separation discs may be frustoconical separation discs, i.e. having separation surfaces forming frustoconical portions of the separation discs. The separation discs are arranged coaxially around the axis of rotation (X) at a distance from each other such that to form passages between each two adjacent separation discs.

Radially outside of the stack of separation discs within the centrifuge bowl is the sludge space, in which separated sludge and heavy phase is collected during operation. The sludge space thus extends radially from the outer portion of the stack of separation discs to the inner periphery of the centrifuge bowl. As seen in the axial plane, the sludge space may taper in the radial direction towards the sludge outlets.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

The centrifugal separator also comprises an inlet for liquid mixture to be separated (the liquid feed mixture). This inlet may be arranged centrally in the centrifuge bowl, thus at rotational axis (X). The centrifuge bowl may be arranged to be fed from the bottom, such as through a spindle, so that the liquid feed mixture is delivered to the inlet from the bottom of the separator. However, the centrifuge bowl may also be arranged to be fed from the top, such as through a stationary inlet pipe extending into the centrifuge bowl.

Further, also one or two liquid outlets may be arranged at the top or the bottom of the centrifugal separator. The liquid outlet or outlets may be arranged for continuous discharge of a separated liquid phase.

The sludge outlets are arranged for discharging sludge that has accumulated in the sludge space. The sludge outlets may be in the form of a set of intermittently openable outlets. The intermittently openable outlets may be equidistantly spaced around the axis of rotation (X).The centrifugal separator may comprise an intermittent discharge system with an operating slide in the centrifuge bowl for opening and closing of the sludge outlets, as known in the art. The opening and closing of the sludge outlets may be controlled by the supply of a hydraulic fluid, such as water, form an operating water module (OWM).

There is further a turbidity sensor, or turbidity meter, arranged upstream of the inlet. Upstream thus refers to a position that the liquid feed mixture to be separated reaches before reaching the inlet. This turbidity sensor may be arranged outside of the centrifuge bowl, such as in a stationary liquid feed pipe used for supplying liquid fed mixture to the inlet. Thus, in embodiments, the centrifugal separator further comprises a stationary inlet pipe for supply of liquid feed mixture to the inlet, and a turbidity sensor arranged for measuring the turbidity of the inlet feed mixture in the stationary inlet pipe. The turbidity sensor may be configured for measuring the amount of light that is absorbed or scattered by suspended particles in the liquid feed mixture.

The control unit may comprise any suitable type of programmable logical circuit, processor circuit, or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. Thus, the control unit may comprise a processor and an input/output interface for communicating with the supply system, such as an OWM, and for receiving information about a measured air pressure around the centrifuge bowl.

The control unit may thus be configured for executing steps b) and c) in the method according to the first aspect above.

In embodiments of the second aspect, the control unit is configured for determining the particle flow rate of the liquid feed mixture based on a measured turbidity of said turbidity sensor and a measured flow rate of said liquid feed mixture.

Consequently, the centrifugal separator may also comprise a flow sensor, or flow meter, for determining the flow rate, such as the volume flow, of the liquid feed mixture to be separated. Such a flow sensor may be arranged upstream of the inlet, such as arranged for measuring the flow rate in a stationary inlet pipe used for supplying liquid feed mixture to the inlet.

In embodiments of the second aspect, the control unit is configured for determining the particle flow rate by using a calibration function of the turbidity as a function of particle concentration in the liquid feed mixture. The control unit may thus be configured to access data of such a calibration function.

Further, in embodiments of the second aspect, the control unit is configured for determining the volume filled with particles within the centrifuge bowl by integrating the particle flow rate over time.

In embodiments of the second aspect, the control unit is configured to determine the volume filled with particles within the centrifuge bowl continuously during operation of the centrifugal separator.

In embodiments of the second aspect, the centrifugal separator is further comprising an additional turbidity sensor downstream of a liquid outlet, and wherein the control unit is further configured for discharging a sludge phase via said sludge outlets if the measured turbidity by said additional turbidity sensor is above a threshold value. Such an additional turbidity sensor may be arranged for measuring the turbidity of a separated liquid phase in a stationary outlet pipe to which the separated liquid phase is discharged from the centrifugal separator. Consequently, the centrifugal separator may comprise a stationary outlet pipe for receiving a separated liquid phase discharged from the centrifuge bowl, and the additional turbidity sensor may be arranged for measuring the turbidity in such a stationary outlet pipe.

In embodiments of the second aspect, the inlet and at least one of the liquid outlets are hermetically sealed. The seals may be mechanical seals or liquid seals. As an example, the centrifugal separator may be hermetically sealed at the inlet and all liquid outlets. The centrifugal separator may comprise a single liquid outlet and may be hermetically sealed at the inlet and at the single liquid outlet. However, one or several of the inlet and liquid outlets may be open. For example, the liquid outlet or outlets may be equipped with a paring disc for discharging a separated liquid phase.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of a centrifugal separator according to an embodiment of the present invention.
Figure 2 shows a schematic drawing of a cross-section of a centrifuge bowl.
Figure 3 shows a flow chart of a method of operating a centrifugal separator.
Figure 4 shows an example of a calibration function of the turbidity sensor value as a function of yeast concentration in water.

### Detailed Description

The centrifugal separator and the method according to the present disclosure will be further illustrated by the following description with reference to the accompanying drawings.

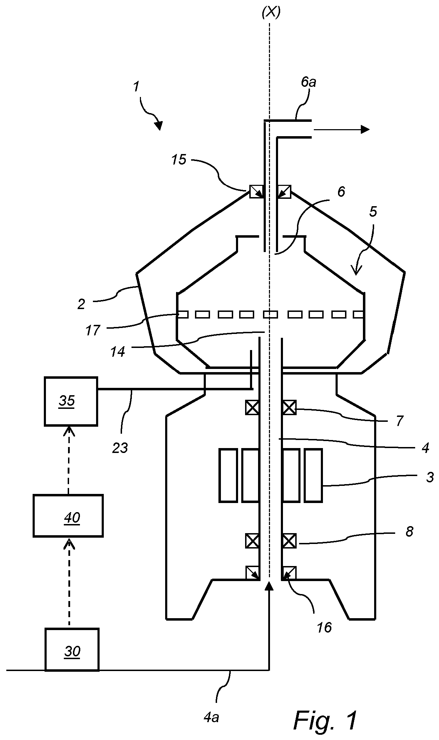

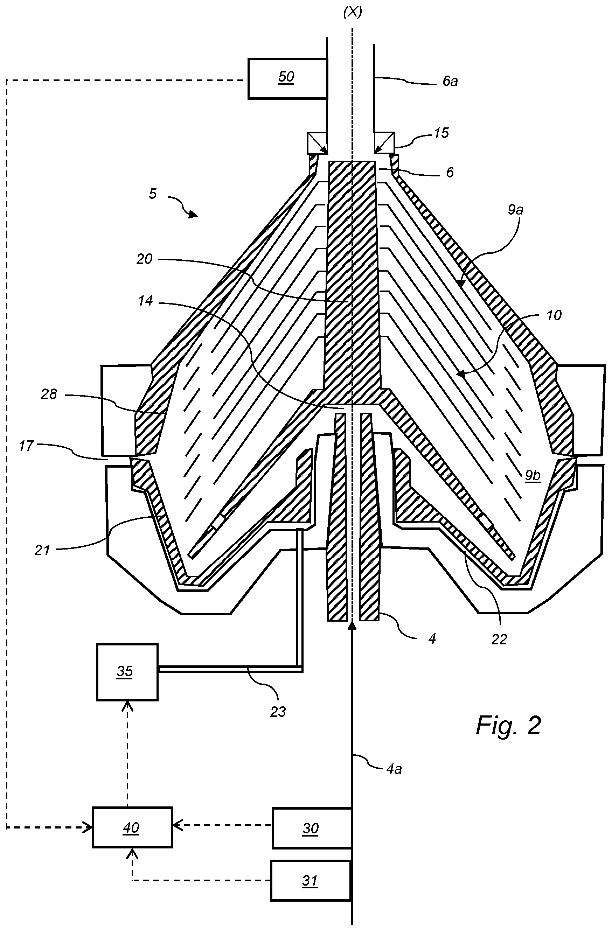

Fig. 1 show a cross-section of an embodiment of a centrifugal separator 1 configured to separate a heavy phase and a light phase from a liquid feed mixture. The centrifugal separator 1 comprises a rotatable centrifuge bowl, shown in more detail in Fig. 2, which is supported by the spindle. The spindle 7is in turn rotatably arranged in a frame 2 around the vertical axis of rotation (X) in a bottom bearing 8 and a top bearing 7. The stationary frame 2 surrounds centrifuge bowl 5.

The centrifugal separator 1 is further provided with a drive motor 3. This motor 3 may for example comprise a stationary element and a rotatable element, which rotatable element surrounds and is connected to the spindle 4 such that it transmits driving torque to the spindle 4 and hence to the centrifuge bowl 5 during operation. The drive motor 3 may be an electric motor. Alternatively, the drive motor 3 may be connected to the spindle 4 by transmission means. The transmission means may be in the form of a worm gear which comprises a pinion and an element connected to the spindle 4a in order to receive driving torque. The transmission means may alternatively take the form of a propeller shaft, drive belts or the like, and the drive motor may alternatively be connected directly to the spindle 4.

In the centrifugal separator as shown in Fig. 1, liquid feed to be separated is fed from the bottom to the centrifuge bowl 5 via the drive spindle 4 and the stationary inlet pipe 4a.The drive spindle 4 is thus in this embodiment a hollow spindle, through which the liquid feed mixture is supplied to the inlet 14 of the centrifuge bowl 5. However, in other embodiments, the liquid feed mixture to be separated is supplied from the top, such as through a stationary inlet pipe extending into the centrifuge bowl 5.

After separation has taken place within the centrifuge bowl 5, a single separated liquid phase is discharged through stationary outlet pipe 6a from the liquid outlet 6. Sludge may be discharged via sludge outlet 17 arranged at the periphery of the bowl 5. Opening and closing of the sludge outlets 17 are controlled by the supply of a hydraulic fluid, such as water, from operating water module (OWM) 35 via line 23.

The OWM 35, and thus the discharge of a sludge phase within the bowl 5, is controlled by control unit 40, which is also configured for receiving input from a turbidity meter 30 arranged to measure the turbidity of the liquid feed mixture being supplied in stationary inlet pipe 4a. The separator of Fig. 1 is mechanically hermetically sealed at the inlet by means of mechanical seal 16. Further, the liquid outlet 6 is mechanically hermetically sealed by means of mechanical seal 15.

Fig. 2. shows a more detailed view of the centrifuge bowl 5 of the centrifugal separator 1.

The centrifuge bowl 5 forms within itself a separation space 9a and a sludge space 9b, located radially outside the separation space 9a. In the separation space 9a, a stack 10 of separation discs is arranged coaxially around the axis of rotation (X) and is thus arranged to rotate together with the centrifuge bowl 5. The stack 10 of separation discs provide for an efficient separation of solid particles from the liquid, thereby providing a separated liquid phase that moves radially inwards whereas sludge accumulate in the sludge space 9b. Thus, in the separation space 9a centrifugal separation of the liquid feed mixture to takes place during operation.

The stack 10 is supported at its axially lowermost portion by distributor 20. The distributor 20 comprises an annular conical base portion, which is arranged to conduct liquid mixture from the center inlet 14 of the centrifuge bowl 5 to a radial level in the separation space 9a, and a central neck portion extending upwards from the base portion.

The sludge space 9b is in this embodiment confined between an upper inner surface 28 of the centrifuge bowl 5 and an axially movable operating slide 21.

The centrifuge bowl 5 further comprises an inlet 14 in the form of a central inlet chamber formed within or under the distributor 20. The inlet is arranged for receiving the liquid feed mixture and is thus in fluid communication with the hollow interior of the spindle 4, through which the liquid feed is supplied to the centrifuge bowl 5.

The radially inner portion of the disc stack 10 communicates with the liquid outlet 6 for a separated liquid phase of the liquid feed mixture.

The centrifuge bowl 5 is further provided with outlets 17 at the radially outer periphery of the sludge space 9b. These outlets 17 are evenly distributed around the rotor axis (X) and are arranged for intermittent discharge of a sludge component of the liquid feed mixture. The sludge component comprises particles forming a sludge phase. The opening of the outlets 17 is controlled by means of an operating slide 21 actuated by operating water in duct 22, as known in the art. In its position shown in the Fig. 2, the operating slide 21, also called a sliding bowl bottom, abuts sealingly at its periphery against the upper part of the centrifuge bowl 5, thereby closing the separation space 9b from connection with outlets 17, which are extending through the centrifuge bowl 5.

The operating slide 21 is movable between a closed position, shown in Fig 2, in which the sludge outlets 17 are closed, and an open position, in which sludge outlets 17 are open. A closing chamber (not shown) is provided below the operating slide 21. During operation, the closing chamber may contain hydraulic fluid, such as water, acting on the operating slide 21 to close the outlets 17. The draining of the hydraulic fluid from the closing chamber, and thereby opening of the sludge outlets 17, is initiated by introducing hydraulic fluid, such as water, to duct 22 via pipes 23 from a supply system 35 in the form of an operating water module (OWM).

The amount of supplied hydraulic fluid supplied to the centrifuge bowl 5, and thereby the volume of the discharge, may be determined by the magnitude of a trigger signal, which in this case is a pulse of discharge air pressure. The OWM 35 may therefore comprise a compressed air unit which in turn via a trigger signal forces a piston in the OWM 35 to push water from the OWM 35 to the intermittent discharge system, more precisely to duct 22 via pipes 23. Consequently, the volume of the sludge discharge may be regulated by adjusting the discharge air pressure from the compressed air unit of the OWM 35. The supply of hydraulic fluid to duct 22 may be aided by a paring disc (not shown) arranged in a paring chamber arranged in the lower portion of the centrifuge bowl 5.

Supply of water into duct 22 starts the opening of drainage nozzles for drainage of the hydraulic fluid from the closing chamber. This will in turn cause the operating slide 21 to move to a lower position so that sludge is discharged through sludge outlets 17. When the hydraulic fluid has been drained from the closing chamber, the operating slide 21 is again forced to an upper position to close the sludge outlets 17.

Moreover, as shown in Fig. 2, the centrifugal separator comprises a turbidity sensor 30 arranged upstream of the inlet 4. In this example, the turbidity sensor 30 is arranged for measuring the turbidity of the liquid feed mixture to be separated in stationary liquid pipe 4a. Further, there is a flow meter 31 arranged for measuring the volume flow of the liquid feed mixture in the stationary inlet pip 4a.

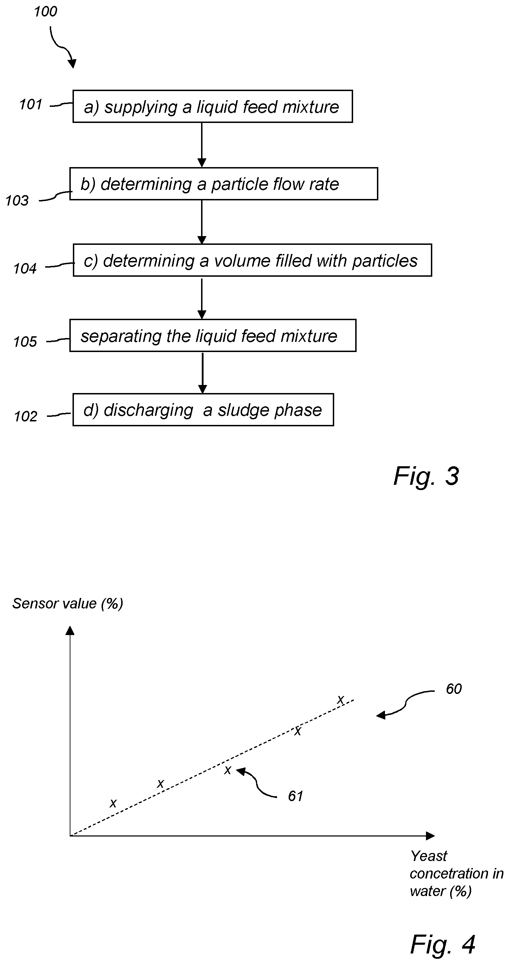

The turbidity sensor 30 and the flow meter 31 are configured for communicating with the control unit 40. This control unit 40 is in turn configured for initiating the discharge of a sludge phase from the sludge space 9b based on the measurements from the flow meter 31 and the turbidity sensor 30. by communicating with the OWM 35. The control unit 40 is thus configured for determining a particle flow rate of the liquid feed mixture being supplied to the inlet 14 based on a measured turbidity by the said turbidity sensor 30 and a measured flow rate by the flow meter 31. The particle flow rate may be determined by using a calibration function 60 of the turbidity as a function of particle concentration in the liquid feed mixture. This is further explained in relation to Fig. 4.

The control unit 40 is further configured for determining a volume filled with particles within the centrifuge bowl 5 continuously during operation of the centrifugal separator based on the measured particle flow rate. The volume filled with particles within the centrifuge bowl 5 may be calculated by integrating the particle flow rate over time. Further, the control unit 40 may be configured for comparing the determined volume filled with particles with the volume of the sludge space 9b.

In order to perform the calculations of the volume filled with particles introduced into the centrifuge bowl 5 via the liquid feed mixture, the control unit 40 may for example comprise a calculation unit which may take the form of substantially any suitable type of programmable logical circuit, processor circuit, or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The calculation unit may represent a processing circuitry comprising a plurality of processing circuits, such as, e.g., any, some or all of the ones mentioned above. The control unit 40 may further comprise a memory unit which provides the calculation unit with, for example, stored program code and/or stored data which the calculation unit needs to enable it to do calculations. The calculation unit may also be adapted to storing partial or final results of calculations in the memory unit. The memory unit may comprise a physical device utilised to store data or programs, i.e., sequences of instructions, on a temporary or permanent basis.

The control unit 40 is further configured for initiating a discharge of a sludge phase comprising the particles via said sludge outlets 17 based on the determined volume filled with particles within the centrifuge bowl. The discharge may be of a specific volume or at a specific time point. The sludge discharge may be before the determined volume filled with particles is larger than the volume of the sludge space 9b, by sending operational instructions to the OWM 35. However, as an alternative or complement, the control unit 40 may be configured to initiate discharge when the determined volume filled with particles within the bowl 5 has reached a certain value, which may be selected by the operator. Thus, with the method and separator of the present invention, the operator may select to discharge a certain volume of sludge, and such discharge may be initiated once the determined volume filled with particles within the bowl 65 has reached such a desired volume.

The centrifugal separator 1 is in this example further comprising an additional turbidity sensor 50 downstream of the liquid outlet 6. This additional turbidity sensor 50 is arranged for measuring the turbidity of the separated liquid phase being discharged in stationary outlet pipe 6a. The control unit 40 is further configured for receiving information about the measured turbidity of the separated liquid phase from the additional turbidity sensor 50 and configured for discharging a sludge phase via the sludge outlets 17 if the measured turbidity by the additional turbidity sensor 50is above a threshold value.

For communication with the turbidity sensors 30, 50, the flow meter 31 and the OWM 35, the control unit 40 may comprise an interface for sending instructions to the OWM 35 and for receiving information about the measured turbidites from turbidity sensors 30, 50 and information about the measured flow rate from flow meter 31.

During operation of the separator as shown in Fig. 1 and 2, the centrifuge bowl 5 is brought into rotation by the drive motor 3. Via the spindle 4, liquid feed mixture to be separated is brought into the separation space 9a. Depending on the density, different phases in the liquid feed mixture is separated between the separation discs of the stack 10. A heavy sludge phase moves radially outwards between the separation discs to the sludge space 9b, whereas the liquid phase moves radially inwards between the separation discs and is forced through liquid outlet 6 arranged at the top of the bowl 5. Sludge accumulate at the periphery of the sludge space 9b and is emptied intermittently from within the centrifuge bowl by the sludge outlets 17 being opened, whereupon sludge and a certain amount of fluid is discharged from the centrifuge bowl 5 by means of centrifugal force. The time for discharge is determined by the control unit 40. As discussed above, discharge may for example be initiated when the calculated volume filled with particles has reached a threshold value that is lower than the volume of the sludge space 9b. As a back-up, the control unit 40 further receives information about the turbidity of the separated liquid phase. If that indicates that the concentration of particles in the separated liquid phase is above a certain threshold, the control unit 40 may initiate discharge independent on the calculated volume filled with particles in the centrifuge bowl 5.

The centrifugal separator 1 of Fig. 1 and 2 may be used for the clarification of beer, such as the removal of yeast from a process liquid in the processing of beer.

However, the method may also be used in a variety of other applications, such as in the separation of different dairy applications and in the production of other beverages.

Thus, as illustrated in Fig. 3, the method 100 of operating the centrifugal separator 1 comprises a step a) of supplying 101 a liquid feed mixture to be separated to the inlet 11 of the centrifuge bowl 5. The method 100 also comprises a step b) of determining 103 a particle flow rate of the liquid feed mixture being supplied in step a). This may thus be performed by measuring the turbidity and the flow rate of the liquid feed mixture being supplied in step a). The method further comprises a step c) of determining 104 a volume filled with particles within the centrifuge bowl 5 based on the measurements of step b). Step c) may be performed by integrating the determined particle flow rate over time. The volume filled with particles within the centrifuge bowl 5 may be determined continuously during operation of the centrifugal separator 1. The method also comprises separating 102 the liquid feed mixture into a sludge phase and at least one liquid phase.

The method also comprises a step d) of discharging 105 a sludge phase comprising the particles via said sludge outlets 17. This is based on the determination of step b), such that the discharge is of a specific volume or at a specific time point.

As discussed above, the method 100 may further comprise a step of measuring the turbidity of a separated liquid phase and discharging a sludge phase via said sludge outlets 17 if the measured turbidity of the separated liquid phase is above a threshold value. This may serve as a back-up to ensure that a discharge is initiated before the particle concentration the separated liquid becomes too high.

Moreover, the method 100 may comprise a step of verifying that the discharged volume of step d) corresponds to the determined volume filled with particles of step c). For example, the method may comprise estimating the volume of the discharged sludge and compare that volume to the determined volume filled with particles in step c), to verify that the determination is within an acceptable error margin.

Furthermore, as discussed herein above, the particle flow rate of step b) may be determined by using a calibration function of the turbidity as a function of particle concentration in the liquid feed mixture. An example of such a calibration function for yeast is illustrated in Fig. 4. The turbidity may for example be measured by a turbidity sensor as the light absorption of the liquid feed mixture. A calibration function 60 may then be determined by using a plurality of samples having a known yeast concentration in a liquid of interest, such as water. The turbidity sensor value (in %) is measured for each sample with a known yeast concentration to generate a number of sample points 61, and a calibration function 60 may then be fitted to the sample points 60. In this example, there is a linear relationship between light absorption (i.e. the sensor value in %) and yeast concentration in water for a yeast concentration within a certain yeast concentration interval, which makes it simple to convert the measured sensor value into a yeast concentration in the liquid mixture that is introduced into the bowl using a linear calibration function 60. However, the overall function of the sensor value as a function of the yeast concertation that is fitted to the sample points may not be a linear function, i.e. the function 60 may be linear over only an interval of the yeast concentration.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method (100) of operating a centrifugal separator (1) for separating at least one liquid phase and a sludge phase from a liquid feed mixture, wherein said centrifugal separator (1) comprises
a frame (2), a drive member (3) and a centrifuge bowl (5), wherein the drive member (3) is configured to rotate the centrifuge bowl (5) in relation to the frame (2) around an axis of rotation (X), and
wherein centrifuge bowl (5) encloses a separation space (9a) and a sludge space (9b);
wherein the separation space (9a) comprises a stack (10) of separation discs arranged coaxially around the axis of rotation (X) and wherein said sludge space (9b) is arranged radially outside said stack (10) of separation discs;
wherein the centrifuge bowl (5) further comprises an inlet (14) for receiving the liquid feed mixture, at least one liquid outlet (6) for a separated liquid phase, and sludge outlets (17) for a separated sludge phase arranged at the periphery of the centrifuge bowl (5);
wherein the method (100) comprises the steps of
a) supplying (101) a liquid feed mixture to be separated to the inlet (11) of the centrifuge bowl (5),
b) determining (103) a particle flow rate of the liquid feed mixture being supplied in step a),
c) determining (104) a volume filled with particles within the centrifuge bowl (5) based on the measurements of step b), and
d) discharging (105) a sludge phase comprising said particles via said sludge outlets (17) based on the determination of step b), wherein the discharge is of a specific volume or at a specific time point.

2. A method according to claim 1, wherein the discharge of step d) is of a volume that is less than the volume of the sludge space (9b).

3. A method according to claim 1 or 2, wherein the discharge of step d) is at a time point that is before the determined volume filled with particles in step c) is larger than the volume of the sludge space (9b)

4. A method (100) according to any previous claim, wherein the particle flow rate is determined by measuring the turbidity and the flow rate of the liquid feed mixture being supplied in step a).

5. A method (100) according to claim 4, wherein the particle flow rate is determined by using a calibration function of the turbidity as a function of particle concentration in the liquid feed mixture.

6. A method (100) according to claim 5, wherein the turbidity is measured as light absorption of the liquid feed mixture.

7. A method (100) according to any previous claim, wherein step c) is performed by integrating the determined particle flow rate over time.

8. A method (100) according to any previous claim, wherein the volume filled with particles within the centrifuge bowl (5) is determined continuously during operation of the centrifugal separator (1).

9. A method (100) according to any previous claim, wherein the method further comprises measuring the turbidity of a separated liquid phase and discharging a sludge phase via said sludge outlets (17) if the measured turbidity is above a threshold value.

10. A method (100) according to any previous claim, wherein the liquid feed mixture comprises yeast particles and wherein the yeast flow rate is determined in step b), the yeast volume within the centrifuge bowl is determined in step c), and wherein a sludge phase comprising yeast is discharged in step d).

11. A method according to any previous claim, further comprising a step of verifying that the discharged volume of step d) corresponds to the determined volume filled with particles of step c).

12. A centrifugal separator (1) for separating at least one liquid phase and a sludge phase from a liquid feed mixture, comprising
a frame (2), a drive member (3) and a centrifuge bowl (5), wherein the drive member (3) is configured to rotate the centrifuge bowl (5) in relation to the frame (2) around an axis of rotation (X), and
wherein centrifuge bowl (5) encloses a separation space (9a) and a sludge space (9b);
wherein the separation space (9) comprises a stack (10) of separation discs arranged coaxially around the axis of rotation (X) and wherein said sludge space (9b) is arranged radially outside said stack (10) of separation discs;
wherein the centrifuge bowl (5) further comprises an inlet (14) for receiving the liquid feed mixture, at least one liquid outlet (6) for a separated liquid phase, and sludge outlets (17) for a separated sludge phase arranged at the periphery of the centrifuge bowl (5);
wherein the centrifugal separator (1) further comprises
a turbidity sensor (30) arranged upstream of said inlet (14) for measuring the turbidity of the liquid feed mixture to be separated; and
a control unit (40) configured for
determining a particle flow rate of the liquid feed mixture being supplied to the inlet (14) based on a measured turbidity by said turbidity sensor (30);
determining a volume filled with particles within the centrifuge bowl (5) based on the measured particle flow rate;
and
initiating a discharge of a sludge phase comprising said particles via said sludge outlets (17) based on the determined volume filled with particles within the centrifuge bowl (5), wherein the discharge is of a specific volume or at a specific time point..

13. A centrifugal separator (1) according to claim 12, wherein the control unit (40) is configured for determining the particle flow rate of the liquid feed mixture based on a measured turbidity of said turbidity sensor (30) and a measured flow rate of said liquid feed mixture.

14. A centrifugal separator (1) according to claim 13, wherein the control unit (40) is configured for determining the particle flow rate by using a calibration function (60) of the turbidity as a function of particle concentration in the liquid feed mixture.

15. A centrifugal separator (1) according to any one of claims 12-14, wherein the control unit (40) is configured for determining the volume filled with particles within the centrifuge bowl (5) by integrating the particle flow rate over time.

16. A centrifugal separator (1) according to any one of claims 12-15, wherein the control unit (40) is configured to determine the volume filled with particles within the centrifuge bowl (5) continuously during operation of the centrifugal separator.

## Patentansprüche

1. Verfahren (100) zum Betreiben eines Zentrifugalseparators (1) zum Separieren mindestens einer flüssigen Phase und einer Schlammphase von einer flüssigen Beschickungsmischung, wobei der Zentrifugalseparator (1) Folgendes umfasst:
einen Rahmen (2), ein Antriebselement (3) und eine Zentrifugentrommel (5), wobei das Antriebselement (3) dafür konfiguriert ist, die Zentrifugentrommel (5) in Bezug auf den Rahmen (2) um eine Drehachse (X) zu drehen, und
wobei die Zentrifugentrommel (5) einen Separationsraum (9a) und einen Schlammraum (9b) umschließt;
wobei der Separationsraum (9a) einen Stapel (10) von Separationsscheiben umfasst, die koaxial um die Drehachse (X) angeordnet sind, und wobei der Schlammraum (9b) radial außerhalb des Stapels (10) von Separationsscheiben angeordnet ist;
wobei die Zentrifugentrommel (5) ferner einen Einlass (14) zum Aufnehmen der flüssigen Beschickungsmischung, mindestens einen Flüssigkeitsauslass (6) für eine separierte flüssige Phase und Schlammauslässe (17) für eine separierte Schlammphase umfasst, die am Umfang der Zentrifugentrommel (5) angeordnet sind;
wobei das Verfahren (100) die folgenden Schritte umfasst:
a) Zuführen (101) einer zu separierenden flüssigen Beschickungsmischung zum Einlass (11) der Zentrifugentrommel (5),
b) Bestimmen (103) einer Partikeldurchflussrate der in Schritt a) zugeführten flüssigen Beschickungsmischung,
c) Bestimmen (104) eines partikelgefüllten Volumens innerhalb der Zentrifugentrommel (5) auf der Grundlage der Messungen von Schritt b), und
d) Ablassen (105) einer Schlammphase, welche die Partikel umfasst, über die Schlammauslässe (17) auf der Grundlage der Bestimmung von Schritt b), wobei das Ablassen ein spezifisches Volumen betrifft oder zu einem spezifischen Zeitpunkt erfolgt.

2. Verfahren nach Anspruch 1, wobei das Ablassen von Schritt d) ein Volumen betrifft, das geringer als das Volumen des Schlammraums (9b) ist.

3. Verfahren nach Anspruch 1 oder 2, wobei das Ablassen von Schritt d) zu einem Zeitpunkt erfolgt, bevor das in Schritt c) bestimmte partikelgefüllte Volumen größer als das Volumen des Schlammraums (9b) ist.

4. Verfahren (100) nach einem der vorhergehenden Ansprüche, wobei die Partikeldurchflussrate durch Messen der Trübung und der Durchflussrate der in Schritt a) zugeführten flüssigen Beschickungsmischung bestimmt wird.

5. Verfahren (100) nach Anspruch 4, wobei die Partikeldurchflussrate durch Verwenden einer Kalibrierungsfunktion der Trübung als Funktion einer Partikelkonzentration in der flüssigen Beschickungsmischung bestimmt wird.

6. Verfahren (100) nach Anspruch 5, wobei die Trübung als Lichtabsorption der flüssigen Beschickungsmischung gemessen wird.

7. Verfahren (100) nach einem der vorhergehenden Ansprüche, wobei Schritt c) durch Integrieren der bestimmten Partikeldurchflussrate im Laufe der Zeit durchgeführt wird.

8. Verfahren (100) nach einem der vorhergehenden Ansprüche, wobei das partikelgefüllte Volumen innerhalb der Zentrifugentrommel (5) während des Betriebs des Zentrifugalseparators (1) kontinuierlich bestimmt wird.

9. Verfahren (100) nach einem der vorhergehenden Ansprüche, wobei das Verfahren ferner das Messen der Trübung einer separierten flüssigen Phase und das Ablassen einer Schlammphase über die Schlammauslässe (17), wenn die gemessene Trübung über einem Schwellenwert liegt, umfasst.

10. Verfahren (100) nach einem der vorhergehenden Ansprüche, wobei die flüssige Beschickungsmischung Hefepartikel umfasst und wobei die Hefe-Durchflussrate in Schritt b) bestimmt wird, das Hefevolumen innerhalb der Zentrifugentrommel in Schritt c) bestimmt wird, und wobei eine Schlammphase, die Hefe umfasst, in Schritt d) abgelassen wird.

11. Verfahren nach einem der vorhergehenden Ansprüche, ferner umfassend einen Schritt des Verifizierens, dass das abgelassene Volumen von Schritt d) dem bestimmten partikelgefüllten Volumen von Schritt c) entspricht.

12. Zentrifugalseparator (1) zum Separieren mindestens einer flüssigen Phase und einer Schlammphase von einer flüssigen Beschickungsmischung, Folgendes umfassend:
einen Rahmen (2), ein Antriebselement (3) und eine Zentrifugentrommel (5), wobei das Antriebselement (3) dafür konfiguriert ist, die Zentrifugentrommel (5) in Bezug auf den Rahmen (2) um eine Drehachse (X) zu drehen, und
wobei die Zentrifugentrommel (5) einen Separationsraum (9a) und einen Schlammraum (9b) umschließt;
wobei der Separationsraum (9) einen Stapel (10) von Separationsscheiben umfasst, die koaxial um die Drehachse (X) angeordnet sind, und wobei der Schlammraum (9b) radial außerhalb des Stapels (10) von Separationsscheiben angeordnet ist;
wobei die Zentrifugentrommel (5) ferner einen Einlass (14) zum Aufnehmen der flüssigen Beschickungsmischung, mindestens einen Flüssigkeitsauslass (6) für eine separierte flüssige Phase und Schlammauslässe (17) für eine separierte Schlammphase umfasst, die am Umfang der Zentrifugentrommel (5) angeordnet sind;
wobei der Zentrifugalseparator (1) ferner Folgendes umfasst:
einen Trübungssensor (30), der stromaufwärts des Einlasses (14) angeordnet ist, zum Messen der Trübung der zu separierenden flüssigen Beschickungsmischung; und
eine Steuerungseinheit (40), die zu Folgendem konfiguriert ist:
Bestimmen einer Partikeldurchflussrate der dem Einlass (14) zugeführten flüssigen Beschickungsmischung auf der Grundlage einer durch den Trübungssensor (30) gemessenen Trübung;
Bestimmen eines partikelgefüllten Volumens innerhalb der Zentrifugentrommel (5) auf der Grundlage der gemessenen Partikeldurchflussrate;
und
Initiieren eines Ablassens einer Schlammphase, welche die Partikel umfasst, über die Schlammauslässe (17) auf der Grundlage des bestimmten partikelgefüllten Volumens innerhalb der Zentrifugentrommel (5), wobei das Ablassen ein spezifisches Volumen betrifft oder zu einem spezifischen Zeitpunkt erfolgt.

13. Zentrifugalseparator (1) nach Anspruch 12, wobei die Steuerungseinheit (40) zum Bestimmen der Partikeldurchflussrate der flüssigen Beschickungsmischung auf der Grundlage einer gemessenen Trübung des Trübungssensors (30) und einer gemessenen Durchflussrate der flüssigen Beschickungsmischung konfiguriert ist.

14. Zentrifugalseparator (1) nach Anspruch 13, wobei die Steuerungseinheit (40) zum Bestimmen der Partikeldurchflussrate durch Verwenden einer Kalibrierungsfunktion (60) der Trübung als Funktion einer Partikelkonzentration in der flüssigen Beschickungsmischung konfiguriert ist.

15. Zentrifugalseparator (1) nach einem der Ansprüche 12 bis 14, wobei die Steuerungseinheit (40) zum Bestimmen des partikelgefüllten Volumens innerhalb der Zentrifugentrommel (5) durch Integrieren der Partikeldurchflussrate im Laufe der Zeit konfiguriert ist.

16. Zentrifugalseparator (1) nach einem der Ansprüche 12 bis 15, wobei die Steuerungseinheit (40) dafür konfiguriert ist, das partikelgefüllte Volumen innerhalb der Zentrifugentrommel (5) während des Betriebs des Zentrifugalseparators kontinuierlich zu bestimmen.

## Revendications

1. Procédé (100) d'exploitation d'un séparateur centrifuge (1) pour séparer au moins une phase liquide et une phase boue à partir d'un mélange de charge liquide, dans lequel ledit séparateur centrifuge (1) comprend :
un bâti (2), un élément d'entraînement (3) et un bol de centrifugeuse (5), dans lequel l'élément d'entraînement (3) est configuré pour entraîner en rotation le bol de centrifugeuse (5) par rapport au bâti (2) autour d'un axe de rotation (X), et
dans lequel le bol de centrifugeuse (5) renferme un espace de séparation (9a) et un espace de boue (9b) ;
dans lequel l'espace de séparation (9a) comprend une pile (10) de disques de séparation agencés de façon coaxiale autour de l'axe de rotation (X) et dans lequel ledit espace de boue (9b) est agencé radialement à l'extérieur de ladite pile (10) de disques de séparation ;
dans lequel le bol de centrifugeuse (5) comprend en outre une entrée (14) pour recevoir le mélange de charge liquide, au moins une sortie de liquide (6) pour une phase liquide séparée et des sorties de boue (17) pour une phase boue séparée agencées au niveau de la périphérie du bol de centrifugeuse (5) ;
dans lequel le procédé (100) comprend les étapes suivantes :
a) la fourniture (101) d'un mélange de charge liquide à séparer sur l'entrée (11) du bol de centrifugeuse (5),
b) la détermination (103) d'un débit d'écoulement de particules du mélange de charge liquide qui est alimenté dans l'étape a),
c) la détermination (104) d'un volume rempli de particules à l'intérieur du bol de centrifugeuse (5) sur la base des mesures de l'étape b), et
d) la décharge (105) d'une phase boue comprenant lesdites particules *via* lesdites sorties de boue (17) sur la base de la détermination de l'étape b), dans lequel la décharge est d'un volume spécifique ou se situe en un point temporel spécifique.

2. Procédé selon la revendication 1, dans lequel la décharge de l'étape d) est d'un volume qui est inférieur au volume de l'espace de boue (9b).

3. Procédé selon la revendication 1 ou 2, dans lequel la décharge de l'étape d) se situe en un point temporel qui est avant que le volume rempli de particules déterminé de l'étape c) ne soit plus important que le volume de l'espace de boue (9b).

4. Procédé (100) selon l'une quelconque des revendications précédentes, dans lequel le débit d'écoulement de particules est déterminé en mesurant la turbidité et le débit d'écoulement du mélange de charge liquide qui est alimenté dans l'étape a).

5. Procédé (100) selon la revendication 4, dans lequel le débit d'écoulement de particules est déterminé en utilisant une fonction d'étalonnage de la turbidité en fonction d'une concentration de particules dans le mélange de charge liquide.

6. Procédé (100) selon la revendication 5, dans lequel la turbidité est mesurée en tant qu'absorption de lumière du mélange de charge liquide.

7. Procédé (100) selon l'une quelconque des revendications précédentes, dans lequel l'étape c) est réalisée en intégrant le débit d'écoulement de particules déterminé au cours du temps.

8. Procédé (100) selon l'une quelconque des revendications précédentes, dans lequel le volume rempli de particules à l'intérieur du bol de centrifugeuse (5) est déterminé en continu pendant l'exploitation du séparateur centrifuge (1).

9. Procédé (100) selon l'une quelconque des revendications précédentes, dans lequel le procédé comprend en outre la mesure de la turbidité d'une phase liquide séparée et la décharge d'une phase boue *via* lesdites sorties de boue (17) si la turbidité mesurée est au-delà d'une valeur de seuil.

10. Procédé (100) selon l'une quelconque des revendications précédentes, dans lequel le mélange de charge liquide comprend des particules de levure et dans lequel le débit d'écoulement de levure est déterminé dans l'étape b), le volume de levure à l'intérieur du bol de centrifugeuse est déterminé dans l'étape c), et dans lequel une phase boue comprenant de la levure est déchargée dans l'étape d).

11. Procédé selon l'une quelconque des revendications précédentes, comprenant en outre une étape de vérification du fait que le volume déchargé de l'étape d) correspond au volume rempli de particules déterminé de l'étape c).

12. Séparateur centrifuge (1) pour séparer au moins une phase liquide et une phase boue à partir d'un mélange de charge liquide, comprenant :
un bâti (2), un élément d'entraînement (3) et un bol de centrifugeuse (5), dans lequel l'élément d'entraînement (3) est configuré pour entraîner en rotation le bol de centrifugeuse (5) par rapport au bâti (2) autour d'un axe de rotation (X), et
dans lequel le bol de centrifugeuse (5) renferme un espace de séparation (9a) et un espace de boue (9b) ;
dans lequel l'espace de séparation (9) comprend une pile (10) de disques de séparation agencés de façon coaxiale autour de l'axe de rotation (X) et dans lequel ledit espace de boue (9b) est agencé radialement à l'extérieur de ladite pile (10) de disques de séparation ;
dans lequel le bol de centrifugeuse (5) comprend en outre une entrée (14) pour recevoir le mélange de charge liquide, au moins une sortie de liquide (6) pour une phase liquide séparée et des sorties de boue (17) pour une phase boue séparée agencées au niveau de la périphérie du bol de centrifugeuse (5) ;
dans lequel le séparateur centrifuge (1) comprend en outre :
un capteur de turbidité (30) agencé en amont de ladite entrée (14) pour mesurer la turbidité du mélange de charge liquide à séparer ; et
une unité de commande (40) configurée pour :
déterminer un débit d'écoulement de particules du mélange de charge liquide qui est fourni sur l'entrée (14) sur la base d'une turbidité mesurée par ledit capteur de turbidité (30) ;
déterminer un volume rempli de particules à l'intérieur du bol de centrifugeuse (5) sur la base du débit d'écoulement de particules mesuré ;
et
initier une décharge d'une phase boue comprenant lesdites particules *via* lesdites sorties de boue (17) sur la base du volume rempli de particules déterminé à l'intérieur du bol de centrifugeuse (5), dans lequel la décharge est d'un volume spécifique ou se situe en un point temporel spécifique.

13. Séparateur centrifuge (1) selon la revendication 12, dans lequel l'unité de commande (40) est configurée pour déterminer le débit d'écoulement de particules du mélange de charge liquide sur la base d'une turbidité mesurée dudit capteur de turbidité (30) et d'un débit d'écoulement mesuré dudit mélange de charge liquide.

14. Séparateur centrifuge (1) selon la revendication 13, dans lequel l'unité de commande (40) est configurée pour déterminer le débit d'écoulement de particules en utilisant une fonction d'étalonnage (60) de la turbidité en fonction d'une concentration de particules dans le mélange de charge liquide.

15. Séparateur centrifuge (1) selon l'une quelconque des revendications 12 à 14, dans lequel l'unité de commande (40) est configurée pour déterminer le volume rempli de particules à l'intérieur du bol de centrifugeuse (5) en intégrant le débit d'écoulement de particules au cours du temps.

16. Séparateur centrifuge (1) selon l'une quelconque des revendications 12 à 15, dans lequel l'unité de commande (40) est configurée pour déterminer le volume rempli de particules à l'intérieur du bol de centrifugeuse (5) en continu pendant l'exploitation du séparateur centrifuge.
